Europäisches Patentamt

(19) European Patent Office

Office européen des brevets

(11) Publication number: **0 188 224**
A2

## (12) EUROPEAN PATENT APPLICATION

(21) Application number: **86100181.6**

(22) Date of filing: **08.01.86**

(51) Int. Cl.⁴: **B 01 D 13/00**

(30) Priority: **09.01.85 JP 811/85**

(43) Date of publication of application:
**23.07.86 Bulletin 86/30**

(84) Designated Contracting States:
**DE FR GB IT**

(71) Applicant: **TORAY INDUSTRIES, INC.**
**2, Nihonbashi-Muromachi 2-chome Chuo-ku**
**Tokyo 103(JP)**

(72) Inventor: **Muragishi, Hideo**
**10-46, Sugiura-cho**
**Otsu-shi Shiga-ken 520(JP)**

(72) Inventor: **Naokatsu, Kanamaru**
**4-1-13, Ichiriyama**
**Otsu-shi Shiga-ken, 520(JP)**

(72) Inventor: **Ikada, Hiroyuki**
**2-4-20, Beppo**
**Otsu-shi Shiga-ken, 520(JP)**

(74) Representative: **Bühling, Gerhard, Dipl.-Chem. et al,**
**Patentanwaltsbüro Tiedtke-Bühling-Kinne**
**Grupe-Pellmann-Grams-Struif Bavariaring 4**
**D-8000 München 2(DE)**

(54) Liquid separation apparatus.

(57) The invention provides a structure and technic which
places means, such as a by-pass circuit or a short-pass
circuit, within the apparatus. This means divides a source
liquid and supplies a suitable quantity of a source liquid to
each of the plurality of liquid separation elements arranged
in series in a vessel, thereby reducing the pressure loss,
occurring in a convential apparatus, when the source liquid
passes through the liquid separation elements. The separa-
tion capacity of all the elements is increased by providing a
more uniform flow and/or pressure to each respecting
element. The liquid separation apparatus employs a con-
struction using the membran separating technic, and is
constituted by loading a plurality of liquid separation
elements in series into a vessel. The apparatus is characte-
rized by including means capable of diverting a portion of
flow of liquid from one separation element to the next or
adjacent downstream element.

Fig.1

## LIQUID SEPARATION APPARATUS

The present invention is directed to an improvement in a liquid separation apparatus which uses a liquid separation membrane technique. More particularly, the present invention relates to structure and technique which reduces a pressure loss when a source liquid passes through a plurality of liquid separation elements arranged in series within a separation vessel. The objectives of the present invention can be obtained by supplying a suitable quantity of the source liquid to each of the plurality of liquid separation elements that are arranged or loaded in series into a vessel.

Liquid separation apparatuses which use a liquid separation membrane are well known in the art, as disclosed, for example, in Japanese Patent Publication Nos. 14216/1969 and 5431/1977.

In order to realize a liquid separation apparatus having higher economy, when using the apparatus in practice, it is preferred that the greatest possible number of liquid separation elements (hereinafter called simply the "elements") be placed or arranged in series into one vessel to provide a liquid separation apparatus (hereinafter called simply the "module"). The liquid separation elements, or simply "elements", usually contain a separating means, such as membrane, and accompanying structure for separating water from a liquid, etc, as known the art.

However, when the number of elements is increased, the pressure loss across the module is increased. This limits the number of elements that can be placed or loaded into one vessel and limits the quantity of the liquid (i.e., water) that can be separated.

In a module using a reverse osmosis membrane, the flow velocity on the membrane surface must be kept above a certain predetermined flow velocity, in order to prevent the reduced performance which results from concentration polarization (non-uniform distribution). Therefore, a certain flow rate Q must be maintained in the final element when viewed from the feed side of the source liquid inside the vessel. That is the reason why the elements are arranged in series, not in parallel in the vessel. However, when the number of elements in one vessel is n and the separation liquid quantity of each element is $Q_p$, source liquid in an amount of $(Q + n \times Q_p)$ must be supplied to the module. This means that in the reverse osmosis module, the pressure loss across the module becomes greater and the number of elements that can be placed into one vessel becomes smaller. This tendency increases when the membrane performance is improved, and when the liquid separation quantity of the element becomes great.

Fig. 9 is a schematic view showing the overall construction of an example of the prior art technique. Four elements $2^1 - 2^4$ are loaded in series into a vessel 1. A source liquid 8 is supplied into the vessel 1 by a pump 7 through an inlet piping arrangement 4. In this conventional example, the gaps between the vessel 1 and the elements $2^1 - 2^4$ are sealed by seal members $3^1 - 3^4$, respectively.

Therefore, the source liquid first passes through the liquid separation membrane surface of the element $2^1$, and the pure liquid after the separation by the membrane is then taken out from the vessel 1 through a pure liquid take-out pipe 6.

The remaining source liquid is supplied to the next element $2^2$, and the pure liquid obtained in the same way is taken out from the pure liquid take-out pipe 6. In this manner, multi-stage processing is conducted sequentially. Finally, the concentrated liquid is discharged outside the system by a concentrated liquid discharge pipe 5.

In the conventional technique and apparatus described above, the elements are disposed in series and each element is completely sealed with respect to the vessel. Therefore, a greater pressure is applied to elements which are closer to the source liquid introduction inlet, and the pressure drops at the elements closer to the final stage, so that the elements closer to the pure liquid take-out pipe 6 cannot function to their full capacity. This problem becomes very significant, particularly, when a high flex type membrane is used wherein a great quantity of water is to be treated under low pressure, especially under 10 kg/cm$^2$.

The conventional technique involves another problem in that the pressure loss can become very large, and the elements can undergo breakage.

To eliminate the problems of the prior art described above, the present invention provides a structure and technique which places means, such as a bypass circuit or a short-pass circuit, within the apparatus. This means divides a source liquid and supplies a suitable quantity of source liquid to each of a plurality of liquid separation elements arranged in series in a vessel, thereby reducing the pressure loss, occurring in a conventional apparatus, when the source liquid passes through the liquid separation elements. The present invention also make the most of the separation capacity of all the elements by the providing a more uniform flow and/or pressure to each respecting element.

To accomplish the object described above, the liquid separation apparatus in accordance with the present invention employs a construction using the membrane separating technique, and is constituted by loading a plurality of liquid separation elements in series into a vessel. The apparatus of the present invention is characterized by including means capable of diverting a portion of flow of liquid from one separation element to the next or adjacent downstream element.

Figs. 1 and 2 show one embodiment of the present invention, wherein an opening 11 is disposed on each seal member 15 existing between a vessel 1 and each element 2;

Fig. 3 shows another embodiment of the present invention, wherein short-path passage (openings) 12, 13 are disposed on each element 2 itself;

Figs. 4 and 5 show still another embodiment of the present invention, wherein grooves 14 are disposed on the inner wall of the vessel;

Figs. 6 through 8 show still another embodiments of the present invention, wherein by-pass pipes 15 ($15^1$ - $15^3$) are disposed on the vessel; and

Fig. 9 is a schematic view showing the overall system of a typical prior art technique.

In the present invention, the expression "loading or arranging a plurality of liquid separation elements ("elements") in series" means an arbitrary number of such elements, so long as at least two elements are loaded or arranged in series. The expression "a means for diverting a portion of source liquid from one separation element into the next or adjacent downstream element" refers to means which assures that a portion of source liquid will not pass on or contact the surface of a separating means, i.e., a membrane, within the liquid separation element and that this portion of source liquid will flow into an adjacent downstream element.

In the present invention, a portion of source liquid is not substantially separated by upstream element(s) or elements of upstream stage(s).

In the present inventions, flow directions, such as upstream and downstream, are relative to the direction of flow of source liquid. For example, in fig. 9, element $2^2$ is upstream of element $2^3$ and downstream of element $2^1$. The diverted portion of source liquid may be the source liquid itself, or a liquid which has been diverted from membrane surface of an upstream element, or liquid which remains after separation in an upstream element.

The means for diverting a portion of source liquid of the present invention can also function to divert portions of source liquid between separation stages, contain a number of elements. Such a means will function and can have a structure the same as that for diverting a portion of flow of liquid between elements, as described herein.

The present invention is characterized in means capable of satisfactorily introducing such a portion of source liquid into downstream elements, ranging from the inlet means of the source liquid. Although various means can be used as the means described above, those which are listed below are preferred .

(1) An opening on each seal member existing between the vessel and each element.

(2) An opening on a part of each element.

(3) A groove on the inner wall of the vessel.

(4) A by-pass pipe arranged on the vessel.

(5) A flow rate regulation mechanism in the by-pass pipe described in (4).

Now, the present invention will be described with reference to the accompanying drawings.

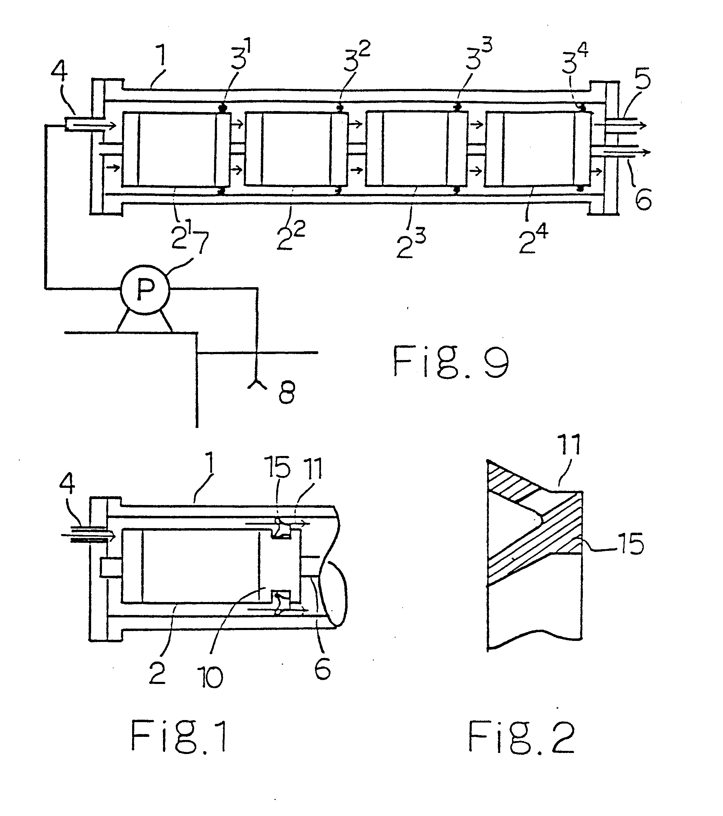

Figs. 1 and 2 show one embodiment of the present invention, in which an opening 11 is formed on each seal member 15 existing between the vessel 1 and each element 2. Ordinary seal members, in general, can be used as the seal member 15, and examples include a V-lip, an O-ring, an X-ring, a Δ-packing, and the like. Preferably, the opening 11 is from 0.5 to 5 cm$^2$ when the diameter of the element is 200 mm. The open area of the opening naturally changes when the element diameter changes, and the number of openings 11 can be arbitrary selected.

When the V-lip is used, the opening preferably opens at a position spaced apart by at least 2 mm from the tip of the lip in order to maintain high strength and to keep the opening highly stable. A pipe of a metal or plastic may be placed into the opening. From a practical point of view. the diameter of the opening is from about 1 to about 5 mm. Such openings preferably have an open ratio increasing from elements or stages of elements arranged near the feed side of the source liquid of the vessel to the output of the vessel, so as to make the pressure loss across the vessel uniform.

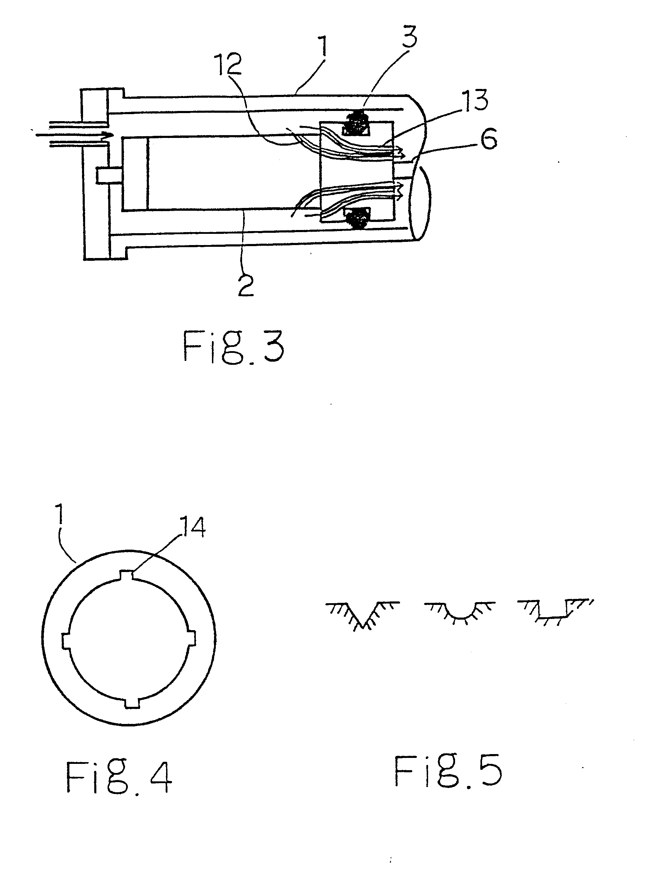

Fig. 3 shows another embodiment of the present invention, in which short-path passages (openings) 12, 13 are formed with in the element 2 itself. Though these short-path passages 12, 13 may be disposed at arbitrary portions of the element, they are preferably disposed at the rigid portions of the element, so as not to damage the separation membrane and in order to use it reliably for an extended period. The term "rigid portion" represents the portion to which the membrane is fixed, other frame portions, a U-seal holder, and so forth. Among them, the U-seal holder is particularly preferable because it is easy to work with. The size and number of the openings are the same as described above and can be varied to achieve the objectives of the present invention.

Figs. 4 and 5 show still another embodiment of the present invention, wherein grooves 14 are formed on the inner wall of the vessel.  The groove 14 may have an arbitrary shape such as a U-shape, V-shape, recessed groove, and the like.  The size and number of the grooves are the same as those of the opening.

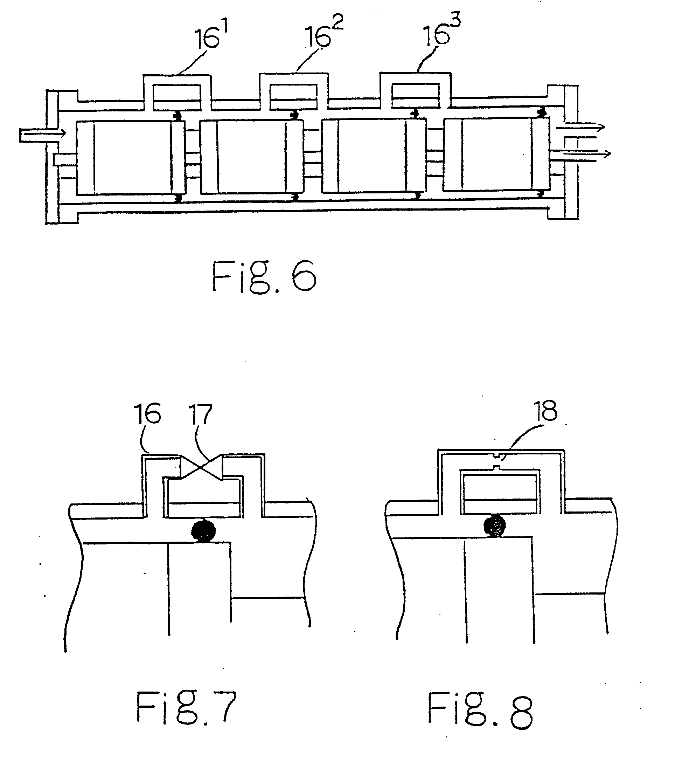

Figs. 6 through 8 show still another embodiment of the present invention, wherein Fig. 6 shows an example in which by-pass pipes 16 ($16^1$ - $16^3$) are disposed on the vessel. Although Fig. 6 shows the three bypass pipes, the number of the by-pass pipes may be an arbitrary number of at least 1. Preferably, a flow rate regulation mechanism is disposed for each by-pass pipe.  Fig. 7 shows and example in which a valve 17 is disposed in by-pass pipe 16, as the flow rate regulation mechanism, and Fig. 8 shows an example in which an orifice 18 is disposed, as the flow regulation mechanism.  In addition, the diameter of the by-pass pipe may be changed appropriately.  The flow resistance, depending on the flow rate regulation mechanism, can be changed in accordance with the flow resistance of the element, but it is preferably in the following range as determined empirically in accordance with the present invention by the following relationship:

$$\Delta p = (2 \times 10^{-4} \text{ to } 1 \times 10^{-3}) \, Q^2$$

Where Q is the quantity of the liquid passing through the by-pass pipe ( in units of : $\ell$/min) and $\Delta P$ is a pressure loss ( in units: $kg/cm^2$).

Any type of separation membrane can be used in the present invention. Specific examples are membranes of a cellulose acetate type, a polyamide type, a cross-linked polyamine type, a crosslinked polyamine/polyether type, a crosslinked polyether type, a polyacrylonitride type, a polyether type, and a sulfonated polysulfone type. These membranes may be suitably combined with one another. The membrane forms prepared from these membrane materials include an asymmetric membrane and a composite membrane. The membrane may include high and low retention membranes and combinations thereof. Element structures of the membrane that can be utilized for producing pure water apparatus include a spiral type, a hollow fiber type, a tubular type, a plate-and-frame type, and so forth.

Having the construction described above, the present invention exhibits the following excellent effects.

(1) Pressure loss in the module can be reduced easily at low cost.

(2) Since module pressure loss can be reduced, the number of elements that can be loaded or arranged into one vessel can be increased, which can reduce costs, because of reduction in the number of vessels necessary to separate a given amount of fluid.

(3) The effects (1) and (2) become more remarkable due to an increased water formation quantity of the element resulting from the improvement or increased efficiency of the membrane therein.

(4)　The module can be used reliably for a long period, and damage to the membrane or the like can be prevented.

Example 1

Experiments were carried out using the apparatus shown in Figs. 1 and 2.　Each element had a spiral shape, and was 200 mm in diameter and 1 m long.　The material of the membrane consisted principally of a crosslinked polyether ("PEC-1000": a commercial product of Toray Industries, Inc.). The V-lip was used as the seal member.

Conditions are follows;

Feed source liquid is salt water( 3.5 wt% NaCℓ ).

Pressure of feed water : 56 kg/cm$^2$.

Quantity of producing pure water : 38 ℓ/min.

Position of short-pass elements : 1st 2nd and 3rd from the feed side.

Other conditions and effects are tabulated in Table 1.

The present invention having by-pass circuits could reduce pressure loss in the module, and the quantity of water formation quantity could be improved by about 10% in comparison with the conventional technique at the same pressure.

Example 2

Experiments were carried out in the same way as in Example 1 using the by-pass circuit shown in Fig. 4. Conditions and effects are tabulated in Table 2.

In the present invention having a by-pass circuit could reduce pressure loss in the module, the quantity of water formation quantity can be improved by about 10% in comparison with the convention technique at the same pressure.

Table 1

| Area of Opening x Number of Short-Pass Elements (cm$^2$ x pcs) | Pore Diameter (mm) | Number of Pore (pcs) | Number of Elements (pcs/vessel) | Feed Quantity of Source Liquid ($\ell$/min) | Pressure Loss Module (kg/cm$^2$) |
|---|---|---|---|---|---|
| 0 | – | – | 6 | 83 | 2.0 |
| 1x3 | 3 | 16 | 6 | 83 | 1.5 |
| 0.5x3 | 3 | 8 | 6 | 83 | 1.8 |
| 3x3 | 5 | 16 | 6 | 83 | 1.0 |

Table 2

| Area of Opening x Number of Short-Pass Elements (cm$^2$ x pcs) | Pore Diameter (mm) | Number of Pore (pcs) | Number of Elements (pcs/vessel) | Feed Quantity of Source Liquid ($\ell$/min) | Pressure Loss Module (kg/cm$^2$) |
|---|---|---|---|---|---|
| 0 | – | – | 6 | 85 | 2.0 |
| 1x3 | 3 | 16 | 6 | 85 | 1.6 |
| 0.5x3 | 3 | 8 | 6 | 85 | 1.8 |
| 3x3 | 5 | 16 | 6 | 85 | 1.1 |
| 5x3 | 5 | 27 | 6 | 85 | 0.8 |

WE CLAIM:

1. In a liquid separation apparatus comprising a vessel having a plurality of liquid separation elements arranged in series therein, the improvement comprising means for diverting a portion of liquid flowing into one of said elements directly into the next adjacent element.

2. The liquid separation apparatus as defined in claim 1, wherein said means is an opening of a seal member existing between said vessel and said liquid separation elements.

3. The liquid separation apparatus as defined in claim 1, wherein said means is an opening formed at a part of said liquid separation element.

4. The liquid separation apparatus as defined in claim 1, wherein said means is a groove formed on the inner wall of said vessel.

5. The liquid separation apparatus as defined in claim 1, wherein said means is a bypass pipe disposed on said vessel.

6. The liquid separation apparatus as defined in claim 5, wherein said bypass pipe is equipped with a flow rate regulation mechanism.

7. The liquid separation apparatus as defined in claim 1, wherein said element includes a separation membrane comprising at least one polymer selected from the group consisting of cellulose acetate, polyamide, cross-linked polyamine, crosslinked polyamine/polyether, crosslinked polyether, polyacrylonitride type, polyether, and sulfonated polysulfone.

8. The liquid separation apparatus as defined in claim 1, wherein said element includes a separation membrane in the form of one of an asymmetric membrane and a composite membrane.

Fig.9

Fig.1

Fig.2

Fig.3

Fig.4

Fig.5

Fig. 6

Fig.7

Fig.8

0188224